# EUROPEAN PATENT SPECIFICATION

(11) **EP 3 042 860 B1**
(45) Date of publication and mention of the grant of the patent: **28.02.2018**
(21) Application number: 15163447.4
(22) Date of filing: 14.04.2015
(51) Int. Cl.: B65D 30/08, B65D 85/804, B65B 29/02

(54) **CONTAINER CONTAINING A PRODUCT TO BE EXTRACTED, AS WELL AS METHOD FOR THE PRODUCTION OF THE CONTAINER**
BEHÄLTER, DER EIN PRODUKT ZUR EXTRAKTION ENTHÄLT, SOWIE VERFAHREN ZUR HERSTELLUNG DES BEHÄLTERS
RÉCIPIENT CONTENANT UN PRODUIT À EXTRAIRE, AINSI QUE LA MÉTHODE POUR LA PRODUCTION DU RÉCIPIENT

(30) Priority: 08.01.2015 NL 2014098
(43) Date of publication of application: 13.07.2016
(73) Proprietor: Stas IP B.V., 5633 AD Eindhoven (NL)
(72) Inventor: Stas, Marinus Barbara Arnoldus Maria, 5527 GR Hapert (NL)
(74) Representative: Verhees, Godefridus Josephus Maria

(56) References cited:
- EP-A1- 2 239 211
- EP-A1- 2 239 212
- WO-A1-2013/053655

## Description

### Field of the invention

The invention relates to a container containing a product to be extracted, more particularly ground coffee beans or cut tea leaves, the container being provided with a plurality of walls of which at least one wall portion comprises a foil of liquid impermeable material, the foil being provided with a multitude of local weakenings in the form of laser-caused recesses provided with a bottom.

### State of the art

A container of this type is known from WO 2013/053655A. This known container is formed by an aluminium cup open at an end side and which is closed by a plastic foil having areas that have local weakenings. An aluminium foil is glued to this plastic foil except for the spots of said areas where the aluminium foil is loosely arranged on the plastic foil. During use of this known container in an apparatus equipped for this container the container is pressed with an end wall against a wall provided with draining holes which have, for example, a wafer-like structure. While the coffee is being prepared, a pressurized liquid is injected into the cup and the foiled end wall is pressed against the wafer-like structure as a result of the liquid pressure built up in the cup, after which this end wall tears open at a number of places. A plurality of the partly torn portions of the end face substantially closes a plurality of draining holes in the wall, so that in the end a restricted draining hole is left, as a result of which the pressure built up in the cup is retained during the extraction and froth is formed.

The function of the aluminium foil glued to the plastic foil is that during use the weakenings in the plastic foil are prevented from tearing open over large lengths. If too many or too large openings evolve in the end face, the draining holes will not be closed or closed less, causing the liquid to leave the container too fast and insufficient pressure to be built up for realising a proper extract and froth. The aluminium foil also provides that the containers are air tight, so that oxygen cannot penetrate the container as a result of which preservability is ensured.

Further, a container according to the preamble of claim 1 is known from EP2239211A1. This known container comprises a delivery wall having two layers provided with offset orifices with seals therebetween. Breaking the seals results in outlets in the wall. These orifices can be formed as a result of local stress (weakenings) in the layers provided by a laser and the subsequent use of the container in an apparatus such that at these local areas the foil breaks.

### Summary of the invention

It is an object of the invention to provide a container of the type defined in the opening paragraph by which during use a good extract can be prepared in the known apparatus. To this end the container according to the invention is characterized in that the weakenings are formed by craters and around each weakening a thickening and/or strengthening of the foil is present having the form of a raised edge around the crater, where the material removed from the middle wholly or in part forms the raised edge around the weakened portion. The thickenings and/or strengthenings prevent the openings formed at the bottom of the weakenings from tearing open further, leading to too large openings being formed and the liquid flowing too fast through the container and too much loss of pressure occurring, so that less extraction will take place leading to suboptimum taste of the extract. The weakenings are present preferably evenly distributed over the entire surface of the wall portion, so that openings distributed over the entire surface will be formed during the preparation process and the liquid will flow more fully through all the product to be extracted. During use of the container in an apparatus suitable for it, the pressure of the liquid will tear open the foil to a minimum extent so that the pressure is hardly waning and just the right amount of liquid flows through the foil. In the known container opening-carrying areas are present at places and the liquid will not flow or flow to a lesser extent through the product to be extracted which is present near the areas without local weakenings.

The foil is preferably non-synthetic, but made of starch and sugars (polylactic acid). The softening point/melting point of this specific foil is considerably lower than that of synthetic foil. As a result, when used in an apparatus, the hot water used (about 90 degrees) causes the foil to reach its softening point fast (which foil softening point is also 90 degrees) so that the foil does not tear open but the bottoms of the recesses melt open.

Said wall portion preferably comprises various layers of which one layer is formed by said foil and a further layer is formed by a sheet of filtering material to which said foil is attached. The filtering material may be a woven as well as a nonwoven fabric. The foil may be made of plastic, paper or aluminium. Since the foil is attached (for example sealed) to filtering material, a slightly fiber-reinforced structure is obtained as a result of which the foil has such a strength that it does not completely model on the wafer-like structure of the wall, so that the liquid during the extraction process succeeds in reaching various draining openings while sufficiently high pressure is retained and a high-quality extract with froth is prepared. At the same time the filtering material thwarts the small particles (for example coffee) which would otherwise clog the tiny holes and could lead to blockage.

An embodiment of the container according to the invention is characterized in that the foil is provided with at least a single through hole. The reason for this through hole is to provide that in a simpler and faster manner during the extraction process liquid is allowed to pass through holes formed in the foil, which liquid weakens the foil via the other side as a result of which more holes are formed in the foil during the extraction process, which leads to an improvement of the extraction process.

An embodiment of the container according to the invention is characterized in that the foil comprises various layers which have different temperature sensitivities. The foil preferably comprises a PLA layer (polylactic acid) as well as a plastic cellulose layer present on it. If the foil comprises solely a PLA layer, there is a chance that during the lasering of the weakenings sometimes the foil is lasered through causing undesired through holes to arise. By applying a multilayer foil where a cellulose/cellophane layer is present against the PLA layer, it is avoided that the laser causes through holes to arise. The cellulose layer has a different temperature sensitivity from the PLA layer. Since the melting point of the cellulose layer is higher than that of the PLA layer, the cellulose layer avoids during the lasering process of the weakenings in the PLA layer that through holes are made in the multi layer foil. An additional advantage of cellulose is that it has a proper oxygen/gas barrier.

A preferred embodiment of the container according to the invention is characterized in that the craters and thickenings and/or strengthenings are formed by means of a CO₂ laser. A CO₂ laser has turned out to be pre-eminently suitable for forming the craters and thickenings/strengthenings. CO₂ lasers emit infrared light that has a wavelength between 9600 and 10640 nanometers. By adjusting the CO₂ laser in the right manner, said craters surrounded by the thickenings/strengthenings in the foil can be realised. If so desired, the foil can be heated prior to the laser process, so that the craters and thickenings/strengthenings can be formed and applied in a simpler manner.

The recesses formed by the laser have a preferably truncated cone shape. This may be effected in the form of a circle (where the conical shape is thus the cone having a truncated top), but may also have an oval or elongated shape. At the top the foil is thinnest and weakest. Caused by the burnings, the foil melts and the molten material flows to the area directly surrounding the burnt spot and forms a raised edge there around the burnt spot. Part of the heated foil material may have been evaporated during the heating process.

A further embodiment of the container according to the invention is characterized in that the distance between the weakenings is situated between 0.2 and 2 mm. During use of the container in an apparatus intended for extracting the product present in the container, the foil is stretched most at the side walls of the protrusions of the wafer-like structure on the plate provided with draining holes against which the container is pressed. By providing that the distance between the weakenings is not too large, a foil portion provided with a weakening will be present, at all these side walls or at any rate most of them. Since the foil is stretched out the most at this location, the weakenings will be opened first, which is advantageous for obtaining a good/optimum extraction process. It has been established by experiment that the optimum distance between the weakenings is situated between 0.4 and 0.8 mm. In the event of smaller distances the foil is to process too much heat during the lasering operation so that it deforms. In the event of larger distances the transit time of the water and the amount of coffee in the extract starts to show more variation and coffee will be obtained having a less constant quality and less froth formation will be found.

Again a further embodiment of the container according to the invention is characterized in that the largest dimension of the bottom of the weakenings is situated between 2 and 80 micrometers. Preferably, the largest dimension of the bottom of the weakenings is situated between 10 and 50 micrometers. These dimensions too are optimum dimensions for obtaining a good/optimum extraction process.

The container may be a pad formed by two rigid walls which are attached to each other along the circumference, where at least either of the walls forms the wall portion mentioned above. These two walls are preferably sealed to each other. At the sealing the walls are preferably not provided with weakenings so as to avoid that the weakenings open up during the sealing operation and holes are developed, so that liquid density and/or air density is no longer present there.

The container may also have the shape of a cylinder or a truncated cone having a circular side wall and two end walls, where at least either of the end walls comprises said wall portion.

In this case the remaining walls of the container may also comprise each a layer of filtering material. In that case the container is first to be inserted into an auxiliary container that is provided with a rigid side wall and a flange projecting outwards in radial direction so as to avoid liquid flowing to the draining holes via the porous side wall along the outside of the container, leading to the fact that there is insufficient build up of pressure for obtaining a good extract.

In this embodiment a plastic foil containing local weakenings is attached preferably also to the other end wall. As a result, it does not matter which end wall is projecting forward when the container is inserted into the auxiliary container and thus the container cannot be inserted in the wrong position into the auxiliary container. One of the weakened foils will then first contact hot water from the outside, so that it is weakened and subsequently at the weakenings allows water to pass through or tears open. In situations where the foil on the inflow side does not allow water to pass through, the water will pass the foil. This does not affect the extraction because on the inflow side the compression of the contents (coffee/tea) is not as strong as on the outflow side. Thereafter, pressure is built up in the container and the other foil is pressed against the wafer-like structure as has already been described above. One foil layer then works as a compression foil and will exert a uniform compression force.

The remaining walls may also be made of rigid water impermeable material and form a cup open at one end side, where the side wall edge bounding on the open end side is provided with a flange projecting outwards in radial direction, to which the sheet of filtering material is attached that carries the foil provided with local weakenings and closes the open end side. Preferably, the side wall and this end wall are self-supporting. In this embodiment too the foil is preferably sealed to the flange, where preferably in the place of the sealing the walls do not carry weakenings. All this again for the purpose of preventing the weakenings from melting open and holes developing during the sealing operation, so that no liquid density and/or air density is found any more.

Preferably the side wall and end wall of the container are made of oxygen impermeable material and the sheet of filtering material covered by the foil that carries local weakenings has an oxygen impermeable barrier layer. This barrier layer may be present on the sheet of filtering material or on the foil or between the sheet of filtering material and the foil and may be a separate sheet or be formed by a film, for example polyvinylalcohol, SiOx (silicon oxide), or ORMOCER®, the latter being an inorganic-organic hybrid polymer (brand name of the Fraunhofer-Gesellschaft zur Förderung der angewandten Forschung e.V. Munich). This barrier layer may also be a metallised biologically degradable compostable foil or a wafer-thin biologically degradable compostable foil having barrier properties. This barrier layer augments the preservability and provides that this cup need not be packed in oxygen impermeable packaging. The container may be made from a biologically degradable compostable material, where the side wall and end wall are clad with an oxygen impermeable layer or film, for example polyvinyl alcohol. The container may optionally be an injection moulded product or thermoform product and the container is metallized on the inside and/or outside (for example vaporized) with a thin metal layer (for example aluminium) and finished with an oxygen impermeable layer (for example polyvinyl alcohol), or a biologically coloured varnish layer. In addition to an oxygen barrier this also has a beautiful and recognizable look, so that the user can see that he or she is taking the right capsule (container).

Preferably, the barrier layer is formed by a separate sheet that is attached to the foil and the sheet of filtering material and which may be removed before use. For this purpose the sheet of barrier material is preferably formed by a fully or partly removable or detachable (tearable) sticker sheet, which is attached to the sheet of filtering material that carries the foil with its local weakenings. The separate sheet may as desired also be sealed over the flange of the cup in an ultrasonic manner or by means of a heating operation. The sticker sheet is preferably a square one or provided with one or more lips. Also a large sticker sheet extending beyond the flange is one of the options. Owing to the lip(s) or protruding parts the user cannot insert the cup into the coffee machine and thus the user is compelled to tear the sticker sheet loose and thus it is avoided that the sticker sheet unintentionally remains on the cup during the making of the coffee. The barrier layer is again made of preferably biologically degradable compostable material and can be printed with instructions for use intended for the user. If the container is provided with openings at an end wall, in this case the bottom, it is obviously advisable to provide this side too with an oxygen barrier, for example by means of a removable sheet provided with a lip. In an even more user-friendly embodiment the removable sheets are connected to each other, so that the user removes the two removable barrier sheets in a single movement of the hand.

An embodiment of the container according to the invention is characterized in that the weakenings are situated on at least one side of the foil and this foil side provided with the weakenings is attached to the sheet of filtering material.

For accelerating the process of preparing a liquid (coffee, tea, ...) a further embodiment of the container according to the invention is characterized in that the foil, in addition to the weakenings, is provided with at least a single hole or slot that extends through the complete thickness of the foil. The hot water/extract weakens the foil more rapidly because it also comes into contact with the other side of the foil through the hole. The filtering material (possibly comprised of various layers) thwarts the product to be extracted and while doing so becomes partly silted up. This does not form any problem because of the presence of the hole since the preparation process has already started and the damages have opened up sufficiently for allowing a sufficient amount of liquid/extract to pass. Preferably said hole or slot is present in the middle of the foil. The opening formed by said hole is preferably larger than the openings formed by the weakenings (at any rate if they are there) in the foil. Alternatively it is possible to provide openings/holes only in the sheet of filtering material.

The foil is preferably made of biologically degradable compostable material. Furthermore, also the sheet of filtering material is preferably made of biologically degradable compostable material.

The cup is made of for example aluminium or plastic or a biologically degradable/compostable biopolyester material.

The invention also relates to a set of two containers according to the invention. With respect to this set the invention is characterized in that each container has the shape of a truncated cone having a circular side wall and two end walls, where at least one of the end walls comprises the wall portion mentioned above and the remaining walls are made of a rigid water impermeable material and form a cup open at one end side, where the side wall edge bounding on the open end side is provided with a flange that extends outwards in radial direction, to which flange the sheet of filtering material is attached that carries the foil provided with local weakenings and closes the open end side, where the side wall and end wall of the cup are made of oxygen impermeable material, and where the two cups having their flanges on each other are connected to each other in a releasable and airtight manner. The flanges may be amalgamated for example over the outer circumference. The cups attached together may easily be separated from each other, where the break mark is present along the outer circumference of the flanges and at the spot where the cups were attached to each other.

Furthermore, the invention relates to a method of manufacturing a container, comprising:
- the manufacture of a pouch open at one end side and made of filtering material or of a cup of rigid material open at one end side, which pouch or cup is comprised of a side wall and an end wall, and which cup at a side wall edge bounding on the open end side is provided with a flange extending outwards in radial direction,
- then the filling of the pouch or cup with a product to be extracted, more particularly ground coffee beans or cut tea leaves,
- the manufacture of a foil of liquid impermeable material, and
- the weakening of the foil by providing recesses in the foil by means of a laser, and
- thereafter the closing of the open end side with the foil that carries weakenings, where the foil is attached to the portions of the filtering material or of the cup situated around the open end side.

With respect to the method, the invention is characterized in that when the weakenings are being provided in the foil, the foil surrounding each recess is thickened and/or strengthened and that the recesses are made by means of a CO₂ laser such that the thickenings and/or strengthenings adopt the shape of a completely or partially raised edge around a crater, where the completely or partially raised edge around the weakened area is formed with the material removed from the middle.

### Brief description of the drawings

The invention will be further explained below while reference is made to the examples of embodiment represented in the appended drawings of the container according to the invention, in which:
Fig. 1 shows a first embodiment of the container according to the invention together with a sectional view of an auxiliary container;
Fig. 2 shows a sectional view of the sheet of filtering material with attached to it the foil provided with local weakenings;
Fig. 3 shows a sectional view of a second embodiment of the container according to the invention;
Fig. 4 shows a perspective view of a third embodiment of the container according to the invention;
Fig. 5 shows a sectional view of the sheet of an oxygen impermeable barrier layer carrying filtering material with attached thereto the foil provided with local weakenings;
Fig. 6 shows the embodiment shown in Fig. 1 during use in an apparatus equipped for the container;
Fig. 7 shows a wafer-iron-shaped discharge cap of a known apparatus for extracting the product present in the container;
Fig. 8 shows a sectional view of the discharge cap shown in Fig. 7 with above it a weakening-carrying foil of the container according to the invention;
Fig. 9 shows the discharge cap and foil shown in Fig. 8 during use;
Fig. 10 shows a strongly enlarged top view of a part of the foil of the container;
Fig. 11 shows a sectional view of the foil shown in Fig. 10; and
Fig. 12 shows a sectional view of a fourth embodiment of the container according to the invention.

### Detailed description of the drawings

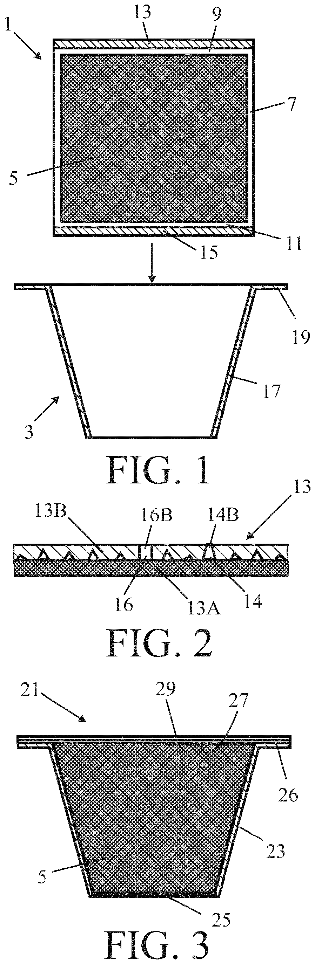

Fig. 1 shows a first embodiment of the container 1 according to the invention together with a sectional view of an auxiliary container 3. The container 1 containing ground coffee 5 is comprised of a side wall 7 and two end walls 9 and 11 which are all formed from a sheet of filtering material. The sheet of filtering material may be both woven and nonwoven fabric. Nonwoven or fleece is a category of textile fabrics that are neither woven nor knitted. Contrary to the conventional manufacture of a textile cloth, no yarn is used, but the fabric is directly used as a fibre or filament in a fleece and then bonded together.

A hard plastic foil 13 and 15 of biologically degradable material is sealed to both end walls. This foil is provided with a relatively large number of local weakenings. These weakenings are formed by means of a CO₂ laser.

The foil sides 13 and 15 carrying the weakenings are sealed to the sheets 9 and 11 of filtering material. Before this container can be used in an apparatus equipped for cooperating with cups, the container is first to be placed in the auxiliary container 3. This auxiliary container is provided with a rigid side wall 17 for avoiding liquid easily flowing to draining holes in the apparatus via the porous side wall along the outside of the container. In the embodiment shown the side wall 17 has a tapered shape. However, the side wall may also have a cylindrical or substantially cylindrical shape. For example between 2 and 6 degrees, but preferably 4 degrees. In practice the latter turns out to be even better because the chance of liquid flowing to the draining holes in the apparatus via the porous side wall along the outside of the container is reduced compared to the case of a clearly tapered side wall. The auxiliary container is open at both ends but the bottom has an end ridge so that pushing the pouch through is not possible and at the same time this end ridge allows of pushing the pouch down better and at the end having the larger diameter the auxiliary container is equipped with an outwardly projecting flange 19. Fig. 2 shows by way of illustration a sectional view of the sheet of filtering material covered by the foil having local weakenings. The sheet of filtering material 9 forms a whole with the side wall 7 and the foil 13 having local weakenings is glued to the sheet of filtering material 9. In addition to the weakenings 14 the foil 13 is provided with a hole 16 extending through the entire thickness of the foil, which hole is preferably situated in the middle of the foil. The opening 16B formed by the hole is larger than the foil openings 14B formed by the weakenings. It may also happen that no through holes at all are formed by the weakenings in the foil. For example, if one wishes to form the oxygen barrier by means of a film. More particularly in this situation the hole 16 proves its use for accelerating the start of the preparation process.

Fig. 3 shows a sectional view of a second embodiment of the container according to the invention. This container 21 has a tapered or substantially cylindrical side wall 23 and an end wall 25 which forms a bottom (optionally provided with openings) which are both made of a rigid material and form a cup open on one end side. The side wall edge bounding on the open end side is provided with a flange 26 projecting outwards in radial direction. To this flange is attached a sheet of filtering material 27 having sealed thereto a hard plastic foil 29 provided with weakenings such that this sheet closes the open end side. The ground coffee 5 present in the container 21 is present in a compressed state so as to avoid that the water/extract forms channels through the ground coffee and is discharged through these channels and not through the whole quantity of ground coffee. Here too it holds that in lieu of the tapered form shown the side wall 23 may also have a cylindrical or substantially cylindrical shape, which may lead to improved results.

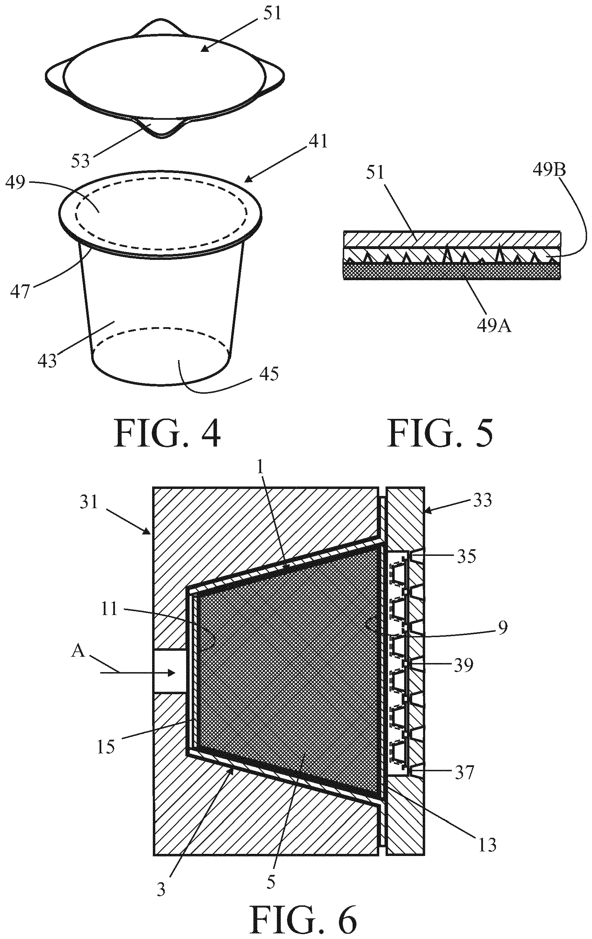

Fig. 4 shows a perspective view of a third embodiment of the container according to the invention. In this container 41 the side wall 43 and end wall 45 are made of oxygen impermeable material. The sheet of filtering material carrying the foil 49 that has local weakenings is attached to the flange 47 of the container. The oxygen impermeable barrier layer is formed by a detachable sticker sheet 51 which is attached to the sheet of filtering material which carries the foil 49 that has local weakenings (the figure shows the sticker sheet detached from the rest of the container). The sticker sheet 51 is provided with one or more lips 53, in this embodiment four lips. As a result, the sticker sheet may be taken up and pulled open in a simple manner. In addition, the user cannot unintentionally leave the sticker sheet during use because he cannot insert the cup provided with the sticker sheet into the coffee making machine and is thus forced to pull the sticker sheet loose. The sticker sheet 51 may obviously also be attached to the flange 47 by means of a heat seal or in ultrasonic manner. The container 41 may also be made of a biologically degradable compostable material and be provided with an oxygen impermeable film layer preferably on the outside of the side wall and end wall 45.

Fig. 5 shows by way of illustration a sectional view of the sheet of filtering material 48 with attached thereto the foil 49 provided with local weakenings. To the sheet of filtering material 48 is glued to the foil 49 that carries local weakenings and the sticker sheet 51 in its turn is detachably adhered to this foil.

Fig. 6 shows the container 1 shown in Fig. 1 during use in an apparatus 31 equipped for this container. During the coffee making process a liquid is injected under high pressure into the cup, as indicated by arrow A. In response to the liquid pressure in the auxiliary container 3 the end wall 13 is partly pushed through the wafer-like structure of the discharge cap 33 (indicated by broken lines) causing it to be torn open at a plurality of places. A plurality of the partly torn portions of the end face close a plurality of discharge holes 35 in the wall, so that in the end a restricted discharge opening is left. As a result, the pressure built up in the auxiliary container 3 is retained during the extraction and froth is formed.

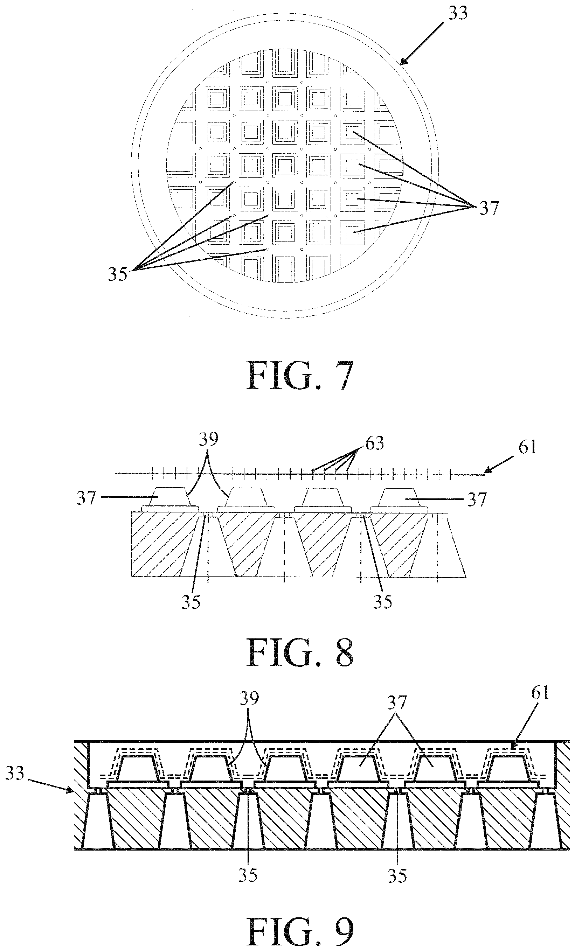

By way of illustration Fig. 7 shows a top view of the wafer-iron-shaped discharge cap 33 of a known apparatus for extracting the product present in the container. The discharge cap 33 is provided with protrusions 37 while the discharge openings 35 are located between the protrusions. The height of the protrusions 37 is 1.2 mm and the distance between the discharge openings 35 is 4 mm.

Fig. 8 shows a sectional view of the discharge cap 33 with above it a weakening-carrying foil 61 of a further embodiment of the container according to the invention. The lines 63 shown are the centre lines of the weakenings present in the foil. These weakenings do not form through holes. During use of the container in the apparatus the foil will form around the protrusions 37, see Fig. 9. In this embodiment the distance between the weakenings is 0.6 mm. At the side walls 39 of the protrusions 37 the foil is stretched out the most. As a result of the chosen distance between the weakenings, at these side walls or at any rate at most of the side walls there will always be present a foil portion carrying a weakening. Since the foil is stretched out the most at this spot, the weakenings will be torn open first, which is advantageous for obtaining a proper/optimum extraction process.

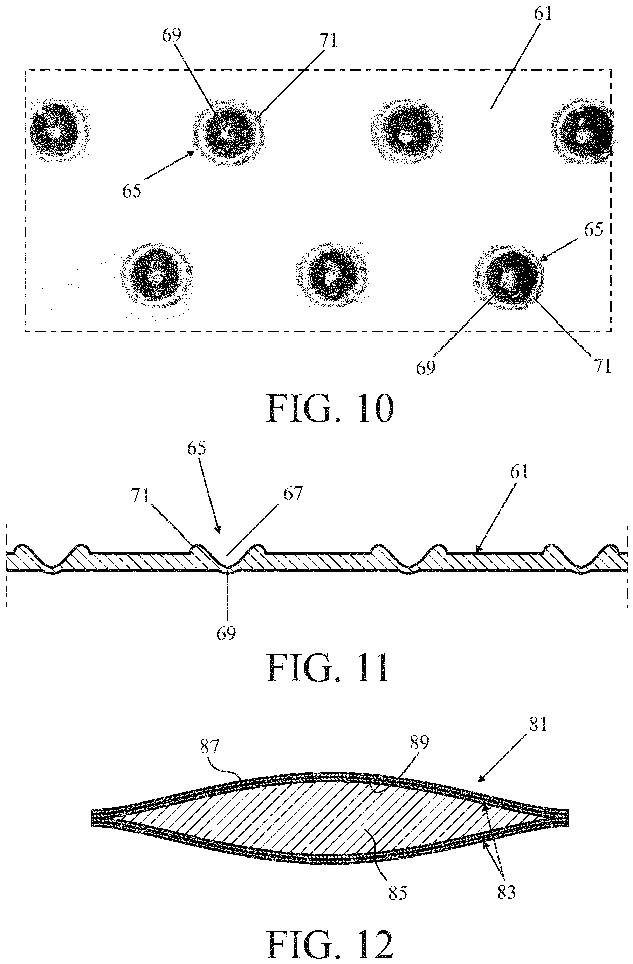

Figs. 10 and 11 show a strongly enlarged top view and sectional view respectively of a part of the foil 61 of the container. In this embodiment the weakenings 65 are burns which are formed by means of a CO₂ laser. The selection of the type of laser also depends on the material and colour of the foil. By adjusting the power and duration of the pulses, an optimum shape of the weakenings 65 may be obtained. The recesses 67 formed by the laser preferably have a conical form with a truncated top. At this top is found the bottom 69 of the weakening and the foil is the thinnest there and the most weakened. Because of the heat of the laser the foil melts and the molten material flows to the area directly surrounding the burn and there forms a raised edge 71 around the burn. This edge forms a strengthening of the foil, which avoids that after the bottoms of the weakenings have broken, that the foil will be torn open any further and thus too large an opening will evolve for an optimum extraction process.

The dimension of the weakening bottom 69 is about 30 micrometers in this embodiment. This is an optimum dimension for obtaining a good extraction process. The thickness of the foil 61 is about 40 micrometers. On the other side of the foil the foil is slightly bulged at the bottom as a result of which the bottom during the stretching of the foil in the apparatus can initially be extended more before the bottom breaks away or tears open. This bulging forms an undulation on the foil.

Fig. 12 shows a sectional view of a fourth embodiment of the container according to the invention. This container 81 is arranged as a pad formed by two walls 83 which are attached to each other along the circumference. The space between the walls is filled with a product to be extracted 85. Each wall is comprised of two layers of which the outer layer 87 is formed by the plastic foil carrying weakenings and the inner layer 89 is formed by a sheet of filtering material attached to the foil.

Although the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims. For example in lieu of the round weakenings whown here and provided by means of the laser, it is also possible for weakenings to be provided in the form of elongated grooves.

## Claims

1. A container (1; 21; 41; 81) containing a product (5; 85) to be extracted, more particularly ground coffee beans or cut tea leaves, the container being provided with a plurality of walls (7-11; 23-29; 43-49; 83) of which at least one wall portion comprises a foil (13, 15; 29; 49; 87) of liquid impermeable material, the foil being provided with a multitude of local weakenings (14; 65) in the form of laser-caused recesses (67) provided with a bottom (69), **characterized in that** the weakenings are formed by craters and around each weakening (14; 65) a thickening (71) and/or strengthening of the foil (13, 15; 29; 49; 87) is present having the form of a raised edge around the crater, where the material removed from the middle wholly or in part forms the raised edge around the weakened portion.

2. A container as claimed in claim 1, **characterized in that** said wall portion comprises various layers of which one layer is formed by said foil (13, 15; 29; 49; 87) and a further layer is formed by a sheet of filtering material (9, 11; 27; 48; 89) to which said foil is attached.

3. A container as claimed in claim 1, **characterized in that** the foil (13, 15; 29; 49; 87) is provided with at least a single through hole (16).

4. A container as claimed in claim 1, 2 or 3, **characterized in that** the foil (13, 15; 29; 49; 87) comprises a PLA layer.

5. A container as claimed in claim 1, 2, 3 or 4, **characterized in that** the foil (13, 15; 29; 49; 87) comprises various layers which have different temperature sensitivities.

6. A container as claimed in claim 5 while reference is made to claim 4, **characterized in that** the foil (13, 15; 29; 49; 87) comprises besides the PLA layer a cellulose layer present on it.

7. A container as claimed in any one of the preceding claims, **characterized in that** the distance between the weakenings (14; 65) is situated between 0.4 and 0.8 mm.

8. A container as claimed in any one of the preceding claims, **characterized in that** the largest dimension of the bottom (69) of the weakenings (65) is situated between 10 and 50 micrometers.

9. A container as claimed in any one of the preceding claims, **characterized in that** the container (1) has the shape of a cylinder or a truncated cone having a circular side wall (7) and two end walls (9, 11), where at least one of the end walls (9) comprises said wall portion and the remaining walls of the container may also comprise each a layer of filtering material and the container forms a refill for a cup (3) open at an end side with a bottom and a circular side wall (17), where also to the other end wall (11) is attached a plastic foil (15) carrying local weakenings.

10. A container as claimed in any one of the preceding claims 1 to 8, **characterized in that** the container (21; 41) has the shape of a truncated cone having a circular side wall (23; 43) and two end walls (25, 27-29; 45, 48-49), where at least one of the end walls (27-29; 48-49) comprises the wall portion mentioned above and the remaining walls (23, 25; 43, 45) of the container are made of a rigid water impermeable material and form a cup open at one end side, where the side wall edge bounding on the open end side is provided with a flange (26; 47) that extends outwards in radial direction, to which flange the sheet of filtering material (27; 48) is attached that carries the foil (29; 49) provided with local weakenings and closes the open end side, where the side wall (23; 43) and end wall (25; 45) of the cup are made of oxygen impermeable material and the sheet of filtering material with the foil carrying local weakenings fixed to it is provided with an oxygen impermeable barrier layer.

11. A container as claimed in claim 10, **characterized in that** the oxygen impermeable barrier layer is formed by a detachable sticker sheet (51) which is fixed to the sheet of filtering material (48) covered by the foil (49) that carries local weakenings.

12. A set of two containers as claimed in any one of the preceding claims 1 to 8, **characterized in that** each container has the shape of a truncated cone having a circular side wall and two end walls, where at least one of the end walls comprises the wall portion mentioned above and the remaining walls are made of a rigid water impermeable material and form a cup open at one end side, where the side wall edge bounding on the open end side is provided with a flange that extends outwards in radial direction, to which flange the sheet of filtering material is attached that carries the foil provided with local weakenings and closes the open end side, where the side wall and end wall of the cup are made of oxygen impermeable material, and where the two cups having their flanges on each other are connected to each other in a releasable and airtight manner.

13. A method of manufacturing a container as claimed in any one of the preceding claims 1 to 11 or each of the containers of the set as claimed in claim 12, comprising:
- the manufacture of a pouch open at one end side and made of filtering material or of a cup of rigid material open at one end side, which pouch or cup is comprised of a side wall and an end wall, and which cup at a side wall edge bounding on the open end side is provided with a flange extending outwards in radial direction,
- then the filling of the pouch or cup with a product to be extracted (5), more particularly ground coffee beans or cut tea leaves,
- the manufacture of a foil (13, 15; 29; 49; 61) of liquid impermeable material, and
- the weakening of the foil by providing recesses (14; 65) in the foil by means of a laser, and
- thereafter the closing of the open end side with the foil (13, 15; 29; 49; 61) that carries weakenings, where the foil is attached to the portions of the filtering material or of the cup situated around the open end side, wherein when the weakenings (14; 65) are made in the foil (13, 15; 29; 49; 61), the foil is thickened and/or strengthened around each recess (14; 65) and that the recesses are made by means of a CO₂ laser such that the thickenings and/or strengthenings adopt the shape of a completely or partially raised edge (71) around a crater, where the completely or partially raised edge around the weakened area is formed with the material removed from the middle.

## Patentansprüche

1. Behälter (1; 21; 41; 81), der ein zu extrahierendes Produkt (5; 85) enthält, insbesondere gemahlene Kaffeebohnen oder geschnittene Teeblätter, wobei der Halter mit einer Anzahl von Wänden (7-11; 23-29; 43-49; 83), von denen mindestens ein Wandteil eine Folie (13, 15; 29; 49; 87) aus flüssigkeitsundurchlässigem Material aufweist, wobei die Folie mit einer Mehrzahl von lokalen Schwächungen (14; 65) in Form eines laserförmige Vertiefungen (67), die mit einem Boden (69) versehen sind, **dadurch gekennzeichnet, daß** die Schwächungen durch Krater (14; 65) gebildet sind und um jede Schwächung eine Verdickung (71) und / oder Verstärkung der Folie (13, 15) 29; 49; 87) vorhanden ist, die die Form eines Kraters hat, wobei das Material in der Mitte ganz oder teilweise entfernt ist und eine erhöhte Kante um den geschwächten Teil bildet.

2. Behälter nach Anspruch 1, **dadurch gekennzeichnet, dass** der Wandteil aus mehreren Schichten besteht, von denen eine Schicht durch die Folie (13, 15; 29; 49; 87) gebildet ist und eine weitere Schicht durch eine Schicht aus Filtermaterial (9, 11, 27, 48, 89), an denen der Film befestigt ist.

3. Behälter nach Anspruch 1, **dadurch gekennzeichnet, dass** die Folie (13, 15; 29; 49; 87) mit mindestens einer durchgehenden Öffnung versehen ist.

4. Behälter nach Anspruch 1, 2 oder 3, **dadurch gekennzeichnet, dass** die Folie (13, 15; 29; 49; 87) eine PLA-Schicht umfasst.

5. Behälter nach Anspruch 1, 2, 3 oder 4, **dadurch gekennzeichnet, dass** die Folie (13, 15, 29, 49, 87) aus mehreren Schichten mit unterschiedlichen Temperaturempfindlichkeiten besteht.

6. Behälter nach Anspruch 5, wobei er sich auf Anspruch 4 bezieht, **dadurch gekennzeichnet, dass** die Folie (13, 15; 29; 49; 87) zusätzlich zu der PLA-Schicht eine darauf befindliche Zelluloseschicht aufweist.

7. Behälter nach einem der vorhergehenden Ansprüche, **dadurch gekennzeichnet, dass** der Abstand zwischen den Schwächungen (14; 65) zwischen 0,4 und 0,8 mm beträgt.

8. Behälter nach einem der vorhergehenden Ansprüche, **dadurch gekennzeichnet, dass** die größte Abmessung des Bodens (69) der Schwächungen (65) zwischen 10 und 50 Mikrometern liegt.

9. Behälter nach einem der vorhergehenden Ansprüche, **dadurch gekennzeichnet, dass** der Behälter (1) hat die Form eines Zylinders oder eines Kegelstumpfes mit einer umlaufenden Seitenwand (7) und zwei Endwänden (9, 11), wobei mindestens eines von die Stirnwände (9), ein Teil der genannten Wand von denen jede auch eine Schicht aus Filtermaterial, die anderen Wände des Behälters umfassen, und der Behälter ist eine Nachfüllung für eine an einer Stirnseite offenen Schale (3) mit einem Boden und einer umlaufenden Seitenwand (17), wobei auch an der anderen Endwand (11) ist eine mit lokaler Dämpfung versehene Kunststoffolie (15) angebracht.

10. Behälter nach einem der vorhergehenden Ansprüchen 1 bis 8, **dadurch gekennzeichnet, dass** der Behälter (21; 41) mit einer umlaufenden Seitenwand die Form eines Kegelstumpfes aufweist (23; 43) und zwei Endwände (25, 27- 29; 45, 48-49), wobei mindestens eine der Endwände (27-29; 48-49) den Wandteil aufweist und die übrigen Wände (23, 25; 43, 45) aus starrem Wasser undurchlässiges Material sind und eine stirnseitig offene Tasse zu bilden, wobei an der offenen Endseite Begrenzungskante der Seitenwand ist mit einem radial nach außen vorstehenden Flansch (26; 47) vorgesehen ist, auf das das Blatt aus Filtermaterial (27; 48) darauf die erwarteten lokalen Schwächungen aufweisen Folie (29; 49) angebracht ist, und das Absperrorgan offenen Endseite, wobei die Seitenwand (23; 43) und Stirnwand (25; 45) der Schale sauerstoffundurchlässigen Material und das Blatt aus Filtermaterial darauf den örtlichen Schwächungen mit Folie versehen ist, ist mit einer sauerstoffundurchlässigen Sperrschicht versehen.

11. Behälter nach Anspruch 10, **dadurch gekennzeichnet, dass** die sauerstoffundurchlässige Barriereschicht von einem entfernbaren Aufkleber gebildet wird (51), die auf dem Blatt aus Filtermaterial angeordnet ist (48) darauf zur Verfügung gestellten Film (49) von lokalen Abschwächungen.

12. Eine Anordnung von zwei Containern nach einem der vorhergehenden Ansprüchen 1 bis 8, **dadurch gekennzeichnet, dass** jeder Halter die Form eines Kegelstumpfes mit einer umlaufenden Seitenwand und zwei Stirnwänden aufweist, wobei mindestens eine der Stirnwände, wobei der Wandabschnitt umfasst und die anderen Wände des starren wasserundurchlässiges Materials und eine Form offener Tiegel auf einer Endseite, wobei an der offenen Stirnseite begrenzende Kante der Seitenwand ist mit einem radial nach außen vorstehenden Flansch versehen, an dem das Blatt aus Filtermaterial darauf den lokalen aufweisen Schwächungen mit Folie versehen ist, angebracht ist, und das Absperrorgan offenen Endseite, wobei die Seitenwand und die Stirnwand der Tasse sauerstoffundurchlässigen Material, und wobei die beiden Schalen mit den Flanschen aneinander lösbar und luftdicht miteinander verbunden sind.

13. Verfahren zur Herstellung eines Behälters nach einem der vorhergehenden Ansprüche 1 bis 11 oder von jedem der Behälter der Anordnung nach Anspruch 12, umfassend:
- die Herstellung eines an einer Stirnseite offener Beutel aus Filtermaterial oder einem an einer Stirnseite offenen Tiegel aus einem starren Material, vorgesehen ist, mit dem Beutel oder eine Tasse einer Seitenwand und einer Stirnwand und dem Becher zu einem offenen Endseite Begrenzungskante der Seitenwand ist mit einem in radialer Richtung nach außen vorstehenden Flansch versehen,
- anschließendes Füllen des Beutels oder Bechers mit einem zu extrahierenden Produkt (5), insbesondere gemahlenen Kaffeebohnen oder geschnittenen Teeblättern,
- die Herstellung eines Films (13, 15, 29, 49, 61) aus flüssigkeitsundurchlässigem Material, und
- die Schwächung der Folie durch Vorsehen von Ausnehmungen (14; 65) in der Folie mit einem Co2 - Laser, und
- dann Schließen der offenen Endseite mit der geschwächten Folie (13, 15, 29, 49, 61), wobei die Folie an den Teilen des Filtermaterials oder der um die offene Endseite vorhandenen Tasse befestigt wird,
**dadurch gekennzeichnet, daß** (14; 65) während der Anwendung der Schwächungen in der Folie (13, 15; 29; 49; 61), wobei die Folie um jede Aussparung (14; 65) ist verdickt und / oder verstärkt ist, und daß die Ausnehmungen mittels eines CO2-Lasers angewendet werden, derart, daß dadurch die Wülste und / oder Verstärkungen in Form eines ganz oder teilweise erhabene Rippe (71) um einen Krater, wobei die gesamte oder einen Teil eines erhabenen Rand um den geschwächten Teil gebildet wird durch das Material in der Mitte weggenommen.

## Revendications

1. Récipient (1; 21; 41; 81) contenant un produit à extraire (5; 85), en particulier des grains de café moulus ou des feuilles de thé coupées, lequel support est pourvu d'un certain nombre de parois (7-11; 23-29; 43-49; 83) dont au moins une partie de paroi comprend une feuille (13, 15; 29; 49; 87) de matériau imperméable aux liquides, laquelle feuille est munie d'une pluralité d'affaiblissements locaux (14; 65) sous la forme d'un creux en forme de laser (67) pourvus d'un fond (69), **caractérisé en ce que** les affaiblissements sont formés par des cratères (14; 65) et autour de chaque affaiblissement d'un épaississement (71) et / ou renforcement de la feuille (13, 15) 29; 49; 87) est présent, qui a la forme d'un cratère, le matériau enlevé au milieu formant entièrement ou partiellement un rebord surélevé autour de la partie affaiblie.

2. Récipient selon la revendication 1, **caractérisé en ce que** ladite partie de paroi est constituée de plusieurs couches dont une couche est formée par ladite feuille (13, 15; 29; 49; 87) et une autre couche est formée par une feuille de matériau filtrant ( 9, 11, 27, 48, 89) sur lequel ledit film est fixé.

3. Récipient selon la revendication 1, **caractérisé en ce que** le film (13, 15; 29; 49; 87) est pourvu d'au moins une ouverture continue.

4. Récipient selon la revendication 1, 2 ou 3, **caractérisé en ce que** la feuille (13, 15; 29; 49; 87) comprend une couche de PLA.

5. Récipient selon la revendication 1, 2, 3 ou 4, **caractérisé en ce que** le film (13, 15, 29, 49, 87) est constitué de plusieurs couches avec différentes sensibilités à la température.

6. Récipient selon la revendication 5, dans lequel il fait référence à la revendication 4, **caractérisé en ce que** le film (13, 15; 29; 49; 87) comprend, en plus de la couche de PLA, une couche de cellulose présente sur celui-ci.

7. Récipient selon l'une quelconque des revendications précédentes, **caractérisé en ce que** la distance entre les affaiblissements (14; 65) est comprise entre 0,4 et 0,8 mm.

8. Récipient selon l'une quelconque des revendications précédentes, **caractérisé en ce que** la plus grande dimension du fond (69) des affaiblissements (65) est comprise entre 10 et 50 micromètres.

9. Récipient selon l'une quelconque des revendications précédentes, **caractérisé en ce que** le récipient (1) a la forme d'un cylindre ou d'un tronc de cône avec une paroi latérale circonférentielle (7) et deux parois d'extrémité (9, 11), dans lequel au moins l'un des les parois d'extrémité (9), ladite partie de paroi embrasser les autres parois du récipient, qui comportent également chacune d'une couche de matériau filtrant et le récipient est une recharge pour un sur un côté d'extrémité coupelle ouverte (3) avec un fond et une paroi latérale circonférentielle (17), grâce à quoi aussi sur l'autre paroi d'extrémité (11) est fixée une feuille plastique (15) pourvue d'une atténuation locale.

10. Récipient selon l'une quelconque des revendications précédentes 1 à 8, **caractérisé en ce que** le récipient (21; 41) a la forme d'un tronc de cône avec une paroi latérale circonférentielle (23; 43) et deux parois d'extrémité (25, 27- 29; 45, 48-49), dans lequel au moins une des parois d'extrémité (27-29; 48-49) comprend ladite partie de paroi et les parois restantes (23, 25; 43, 45) de matériau imperméable à l'eau rigide et ont un pour former une coupe ouverte côté extrémité, dans lequel au niveau du bord de délimitation de côté d'extrémité ouverte de la paroi latérale est pourvue d'un rebord faisant saillie radialement vers l'extérieur (26; 47) sur lequel la feuille de matériau de filtration (27; 48) ayant sur celui-ci les affaiblissements locaux prévus une feuille (29; 49) est fixé, et le côté d'extrémité ouverte fermée-off, dans lequel la paroi latérale (23; 43) et la paroi d'extrémité (25; 45) de la coupelle d'un matériau imperméable à l'oxygène et la feuille de matériau filtrant sur lequel les affaiblissements locaux avec pellicule est muni d'une couche barrière imperméable à l'oxygène.

11. Récipient selon la revendication 10, **caractérisé en ce que** la couche barrière imperméable à l'oxygène est formée par un adhésif amovible (51) qui est disposé sur la feuille de matériau de filtration (48) ayant sur celle-ci le film fourni (49) de affaiblissements locaux.

12. Ensemble de deux conteneurs selon l'une quelconque des revendications précédentes 1 à 8, **caractérisé en ce que** chaque support a la forme d'un tronc de cône avec une paroi latérale circonférentielle et deux parois d'extrémité, dans lequel au moins l'une des parois d'extrémité, ladite partie de paroi comprend et les autres parois en matériau imperméable à l'eau rigide et une coupelle ouverte à former sur un côté d'extrémité, dans lequel sur le côté de l'extrémité ouverte délimitant bord de la paroi latérale est pourvue d'un rebord faisant saillie radialement vers l'extérieur, sur lequel la feuille de matériau filtrant sur lequel la section locale affaiblissements fournis avec le film est fixé, et le côté d'extrémité ouverte d'arrêt, dans lequel la paroi latérale et la paroi d'extrémité de la coupelle d'oxygène matériau imperméable, et dans lequel les deux tasses avec les brides de l'autre reliées de manière amovible et étanche à l'air entre eux.

13. Procédé de fabrication d'un conteneur selon l'une quelconque des revendications précédentes 1 à 11 ou de chacun des supports de l'ensemble selon la revendication 12, comprenant:
- a production d'un d'un côté d'extrémité poche ouverte du matériau filtrant, ou un sur une coupe du côté d'extrémité ouverte d'un matériau rigide, est pourvue de ladite poche ou de coupe d'une paroi latérale et une paroi d'extrémité, et qui coupe à un côté de l'extrémité ouverte délimitant bord de la la paroi latérale est munie d'une bride faisant saillie vers l'extérieur dans la direction radiale,
- remplir ensuite la poche ou la tasse avec un produit à extraire (5), en particulier des grains de café moulus ou des feuilles de thé coupées, - la fabrication d'un film (13, 15, 29, 49, 61) de matériau imperméable aux liquides, et
- l'affaiblissement de la feuille au moyen de la présence de cavités (14; 65) dans la feuille avec un laser au Co2, et
- fermer ensuite le côté d'extrémité ouverte avec la feuille affaiblie (13, 15, 29, 49, 61), la feuille étant fixée aux parties du matériau de filtre ou de la coupelle présentes autour du côté d'extrémité ouverte,
**caractérisé en ce que**, lorsque les affaiblissements (14; 65) sont prévus dans le film (13, 15; 29; 49; 61), la feuille autour de chaque évidement (14; 65) est épaissie et / ou renforcée et les évidements être appliqué au moyen d'un laser CO 2 de telle manière que de ce fait les perles, et / ou des renforts prennent la forme d'une arête en totalité ou en partie surélevée (71) autour d'un cratère, dans lequel la totalité ou une partie d'un rebord autour de la partie affaiblie est formée par le matériel enlevé au milieu.
